# EUROPÄISCHE PATENTANMELDUNG

(11) **EP 1 650 134 A2**
(43) Veröffentlichungstag der Anmeldung: **26.04.2006**
(21) Anmeldenummer: 05022312.2
(22) Anmeldetag: 13.10.2005
(51) Int. Cl.: B65D 43/02

(54) **Behälter**

(30) Priorität: 23.10.2004 DE 102004051630
(71) Anmelder: Jazbinsek, Anton, 88069 Tettnang (DE)
(72) Erfinder: Jazbinsek, Anton, 88069 Tettnang (DE)
(74) Vertreter: Engelhardt, Guido

(57) **Zusammenfassung**

Bei einem Behälter (1), der aus einem als Mantel (5) ausgebildeten Grundkörper (2), an dem in den beiden Endbereichen ein Boden (3) bzw. ein Formteil (4) angebracht sind, besteht der Grundkörper (2) aus Karton (11), der zumindest einseitig mit Kunststoff beschichtet ist. Der Boden (3) ist unmittelbar in den Grundkörper (2) eingeformt oder auf dessen beschichteter Seite fest mit diesem verbunden, und das aus Kunststoff bestehende Formteil (4) ist mittels der Beschichtung (12) des Kartons an dem Grundkörper (2) angebracht.

Durch diese Ausgestaltung wird erreicht, dass die Herstellkosten des Behälters (1) gegenüber den bisher verwendeten gleichartigen Aufnahmebehältnissen in einem erheblichen Maße reduziert werden, auch ist eine kostengünstige Entsorgung der entleerten Behälter (1) gewährleistet, da die Entsorgungsgebühren für derartige Mischprodukte gering sind.

## Beschreibung

Die Erfindung bezieht sich auf einen Behälter, der aus einem als Mantel ausgebildeten Grundkörper, an dem in den beiden Endbereichen ein Boden bzw. ein Formteil, z.B. ein Siegelrand oder ein Mundstück angebracht sind, besteht, sowie auf ein Verfahren zur Herstellung eines derartigen Behälters.

Zur Aufnahme von pastösen, flüssigen oder schüttfähigen Gütern sind Behälter in einer großen Anzahl unterschiedlicher Ausgestaltungen, insbesondere als Joghurtbecher, als Süßwarenverpackung und als Getränkeflaschen, bekannt. Die Außenmantelflächen dieser Behälter sind hierbei als Werbeträger gestaltet, um den Inhalt der Behälter einem breiten Publikum bekannt zu machen.

Da die Außenmantelfläche der Behälter nur mit sehr großem Aufwand unmittelbar bedruckt werden kann, werden als Werbeträger Etiketten vorgesehen, auf denen auf einfache Weise Druckmotive aufgetragen werden können und die leicht an den Behältern zu befestigen sind. Die Etiketten bestehen hierbei aus einer Kunststofffolie und werden nach dem Bedrucken durch Schrumpfen oder Kleben nachträglich auf der Außenmantelfläche des Behälters befestigt.

Auf diese Weise sind sehr ansprechende Verpackungsbehälter geschaffen. Deren Entsorgung nach Verbrauch des bevorrateten Gutes erfordert aber einen außerordentlich hohen finanziellen Aufwand. Zwar können die Behälter mit Deckel und Werbeträger, die vollständig aus Kunststoff bestehen, verbrannt oder durch Zermahlen recycelt werden, die zu entrichtenden staatlichen Gebühren stehen aber in keinem Verhältnis zu den Herstellkosten, so dass dadurch die in derartigen Behältern eingelagerten Güter in einem erheblichen Maße verteuert werden.

Aufgabe der Erfindung ist es daher, einen Behälter zur Bevorratung von Gütern zu schaffen, der zwar in gleicher Weise verwendbar ist wie die bekannten Behälter, für den aber keine oder nur geringe staatliche Gebühren zu entrichten sind, so dass der Anteil an Fremdkosten gering ist und dessen Entsorgung ohne großen finanziellen Aufwand zu bewerkstelligen ist. Des Weiteren soll der Behälter ohne Schwierigkeiten wirtschaftlich herstellbar und vielseitig verwendbar sein.

Gemäß der Erfindung wird dies bei einem Behälter der eingangs genannten Art dadurch erreicht, dass der Grundkörper ganz oder teilweise aus Karton oder Pappe als Ausgangswerkstoff hergestellt ist, der vorzugsweise einseitig mit Kunststoff beschichtet ist, dass der Boden unmittelbar an dem Grundkörper angeformt oder auf dessen beschichteter Seite fest mit diesem verbunden ist und dass das aus Kunststoff bestehende Formteil mittels der Beschichtung des Kartons mit dem Grundkörper fest verbunden ist.

Angezeigt ist es hierbei, die Kunststoffbeschichtung des Grundkörpers auf dessen Innenseite aufzubringen, vorzugsweise aufzusprühen, und den den Grundkörper des Behälters bildenden Mantel aus einem flächigen Kartonabschnitt herzustellen, dessen Stoßkanten nach dem Verformen vorzugsweise auf der Innenseite des Behälters mit einer Siegelnaht abgedeckt sind.

Bei einem Behälter mit einem aus Kunststoff bestehenden Boden ist es angebracht, diesen über einen oder mehrere an dem Boden angeformter Stege mit einem Formteil zu verbinden und den aus Karton oder Pappe bestehenden Mantel des Behälters mit dem Boden, den Stegen und/oder dem Formteil als Rahmen oder Träger durch Anschmelzen vorzugsweise auf deren Außenseiten fest zu verbinden.

Des Weiteren kann der den Mantel des Behälters bildende Karton auf seiner Außenmantelfläche in Form eines Werbeträgers ausgebildet und bedruckt sein.

Das Verfahren zur Herstellung eines derartigen Behälters ist dadurch gekennzeichnet, dass bei einem teilweise durch Spritzgießen herzustellenden Behälter vor dem Ausformen des Bodens, der Stege und/oder des Formteils der aus Karton oder Pappe bestehende mit Kunststoff beschichtete Mantel in das Formwerkzeug eingelegt wird und dass durch Anschmelzen der Kunststoffbeschichtung des Mantels und/oder des Bodens und/oder der Stege und/oder des Formteils bei deren Ausformung diese mit dem Mantel verbunden werden.

Wird ein Behälter gemäß der Erfindung ausgebildet, indem dessen Mantel als Grundkörper aus Karton oder Pappe hergestellt wird, so werden nicht nur die Herstellkosten des Behälters gegenüber den bisher verwendeten gleichartigen Aufnahmebehältnissen in einem erheblichen Maße reduziert, sondern es ist auch eine kostengünstige Entsorgung der entleerten Behälter zu bewerkstelligen. Der vorschlagsgemäß ausgebildete Behälter wird nämlich als Mischprodukt eingestuft, für das gegenüber Vollkunststoffprodukten nur ein Bruchteil an Entsorgungsgebühren zu entrichten sind. Bei nahezu gleichem Eigengewicht, großer Haltbarkeit und ohne dass Beschränkungen bei der Verwendung in Kauf zu nehmen sind, bietet der mit einem Mantel aus Karton ausgestattete Behälter somit erhebliche Vorteile wirtschaftlicher Art, zumal auch die Herstellkosten gering sind.

In der Zeichnung ist ein Ausführungsbeispiel eines im Wesentlichen aus Karton bestehenden Behälters dargestellt, das nachfolgend im Einzelnen erläutert ist. Hierbei zeigt:
- Figur 1: einen zweiteiligen Behälter in einer Explosionsdarstellung,
- Figur 2: einen dreiteiligen Behälter, ebenfalls ein einer Explosionsdarstellung,
- Figur 3: den bei dem Behälter nach Figur 2 verwendeten Mantel in einer Abwicklung,
- Figur 4: einen Schnitt nach der Linie IV - IV der Figur 3,
- Figur 5: den Behälter nach Figur 2 in Vorderansicht,
- Figur 6: einen aus miteinander verbundenen Kunststoffteilen als Rahmen und einem Mantel bestehenden Behälter in einer Explosionsdarstellung,
- Figur 7: die Herstellung des Behälters gemäß Figur 6 nach dem Tiefziehverfahren und
- Figuren 8 und 9: einen quaderförmigen Behälter, der ebenfalls aus einem Rahmen und einem Mantel zusammengesetzt ist.

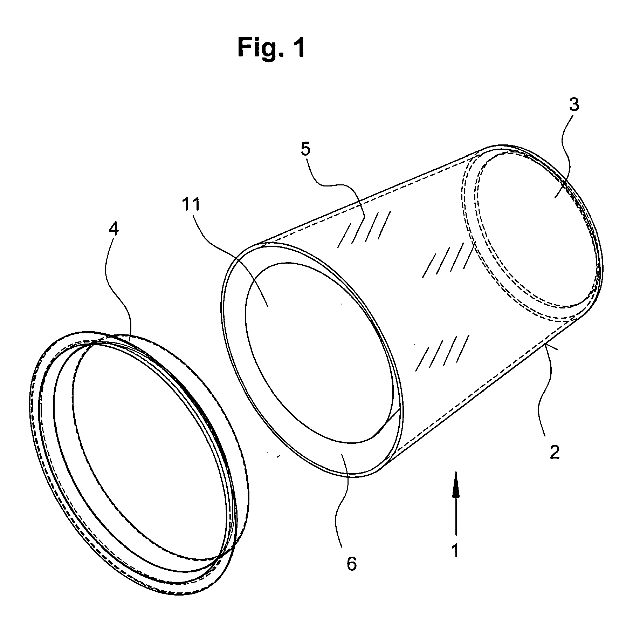

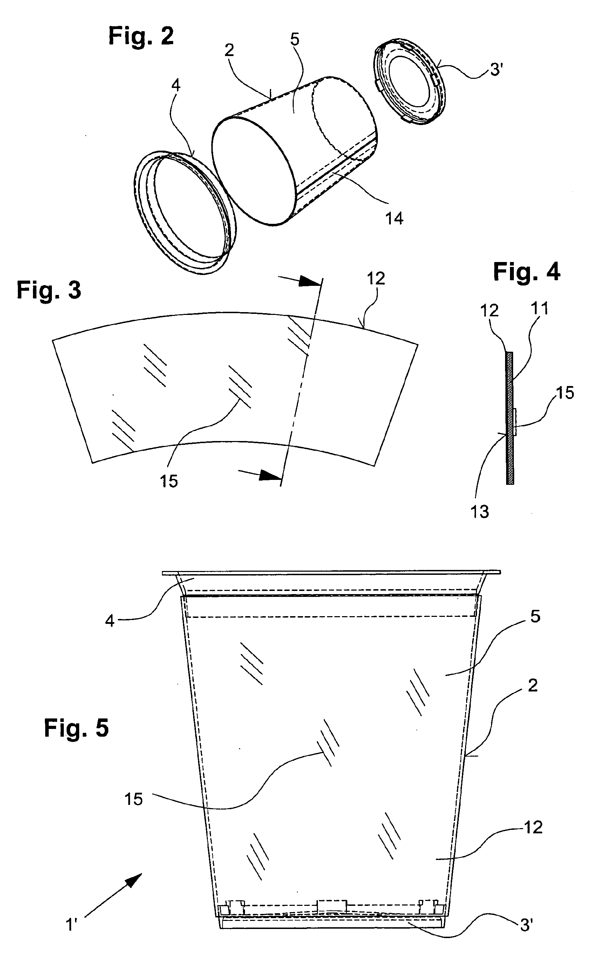

Der in den Figuren 1, 5, 6 und 9 dargestellte und mit 1, 1', 21 bzw. 41 bezeichnete Behälter dient zur Aufnahme von pastösen, flüssigen oder schüttfähigen Gütern und besteht jeweils aus einem Grundkörper 2, 22 bzw. 42 in Form eines Mantels 5, 25 bzw. 45' sowie einem Boden 3, 3', 23 bzw. 43 und einem als Siegelrand ausgebildeten Formteil 4, 24 bzw. 44, auf den nach dem Befüllen des Behälters 1, 1', 21 bzw. 41 ein Verschlussdeckel aufgesiegelt wird. Bei der Ausführungsvariante nach Figur 1 ist der Boden 3 unmittelbar in den Mantel 5 eingeformt, bei der Ausführungsvariante nach den Figuren 2 und 5 dagegen ist der Boden 3' durch ein gesondertes Bauteil aus Kunststoff gebildet.

Nach Figur 1 ist der Grundkörper 2 und damit der Mantel 5 mit angeformten Boden 3 aus Karton 11 oder Pappe hergestellt. Um das Formteil 4 an dem Karton 11 des Mantels 5 befestigen zu können, ist der Karton 11 auf der Innenfläche des Mantels 5 mit einer ringförmig ausgebildeten Beschichtung 6 aus Kunststoff versehen, die vor dem Ausformen des Mantels 5 auf diesen als Streifen aufgesprüht wurde. Durch Erhitzen der Kunststoffbeschichtung 6 und/oder des Formkörpers 4 auf den einander zugekehrten Flächen kann somit der Formkörper durch Anschmelzen des Kunststoffes fest mit dem Mantel 5 verbunden werden.

Der in Figur 5 dargestellte Behälter 1' ist dagegen aus einem Mantel 5 aus Karton sowie einem Boden 3' und einem Formkörper 4, jeweils aus Kunststoff, zusammengesetzt. Der Mantel 5 ist hierbei aus einem Kartonabschnitt 12 gemäß Figur 3 hergestellt, dessen Stoßkanten durch eine Siegelnaht 14 überdeckt sind. Auf der Innenseite ist der Kartonabschnitt 12 ganz oder nur in den oberen und unteren Randbereichen mit einer Kunststoffbeschichtung 13 versehen, mittels der der Boden 3 und der Formkörper 4 durch Verschweißen der Kunststoffe fest miteinander verbunden wird. Außerdem sind auf der Außenseite des Kartonabschnittes 12 Druckmotive oder Beschriftungen 15 aufgebracht.

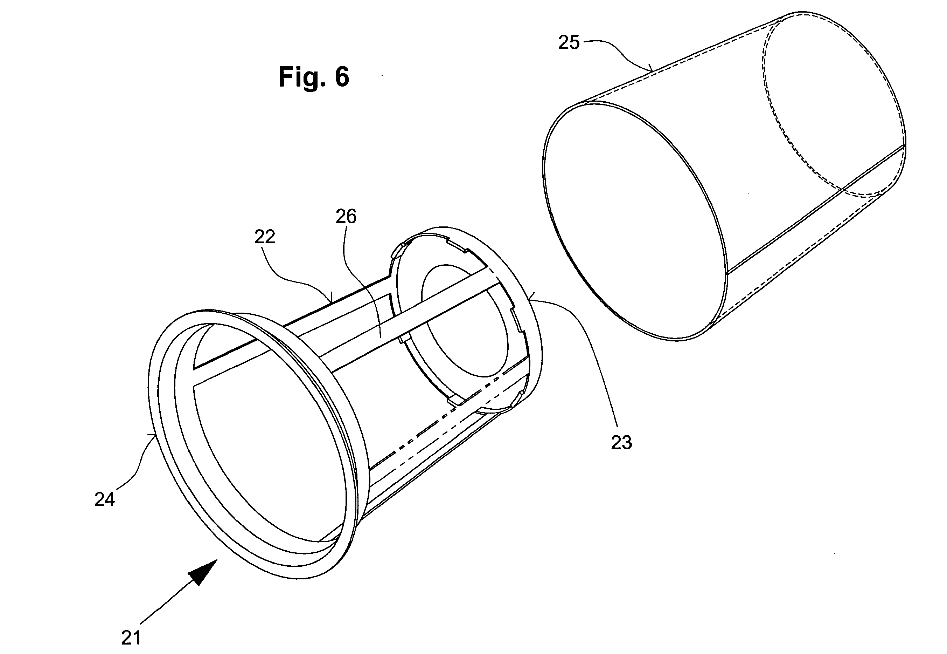

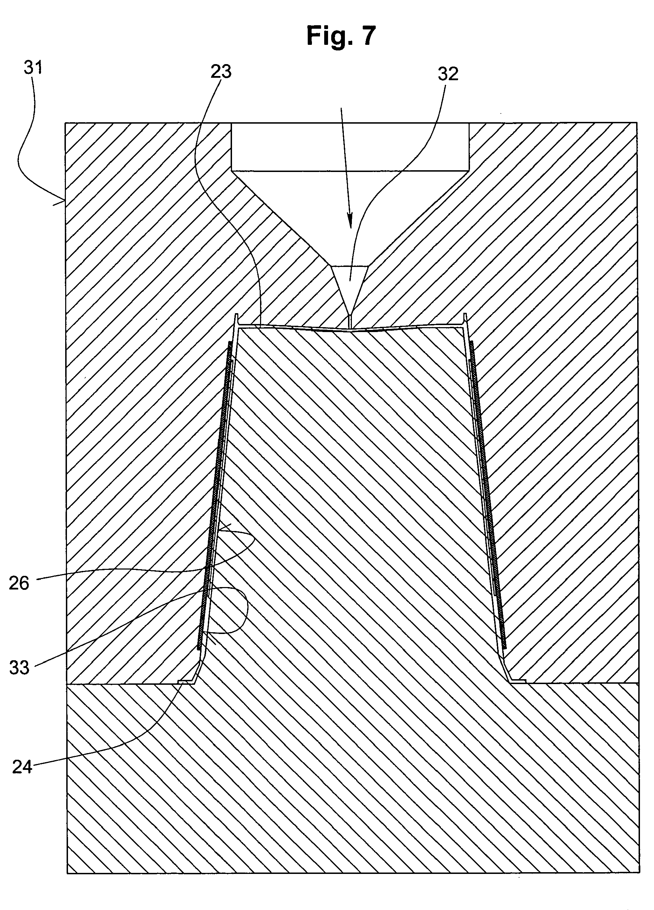

Der in Figur 6 dargestellte Behälter 21 ist aus einem Rahmen 22 aus Kunststoff und einem Mantel 25 aus Karton als Grundkörper zusammengesetzt. Der Rahmen 22 wird hierbei, wie dies in Figur 7 gezeigt ist, in einem Werkzeug 31 ausgeformt, in das der Mantel 25 vor dem Einspritzen des Kunststoffes eingelegt ist und in das mit Hilfe einer Düse 32 der Kunststoff eingebracht wird. Der Boden 23 und das Formteil 24 sind hierbei durch gleichmäßig über den Umfang verteilt angeordnete Stege 26, wobei gemäß der strichpunktierten Darstellung auch nur ein Verbindungssteg vorgesehen sein kann, miteinander fest verbunden. Beim Einspritzen des Kunststoffes in das Werkzeug 31, das mit entsprechenden Freisparungen 33 für die Stege 26 versehen ist, wird die Oberfläche des kunststoffbeschichteten Mantels 25 angeschmolzen, so dass eine feste Verbindung zwischen dem Rahmen 22 und dem Mantel 25 gewährleistet ist.

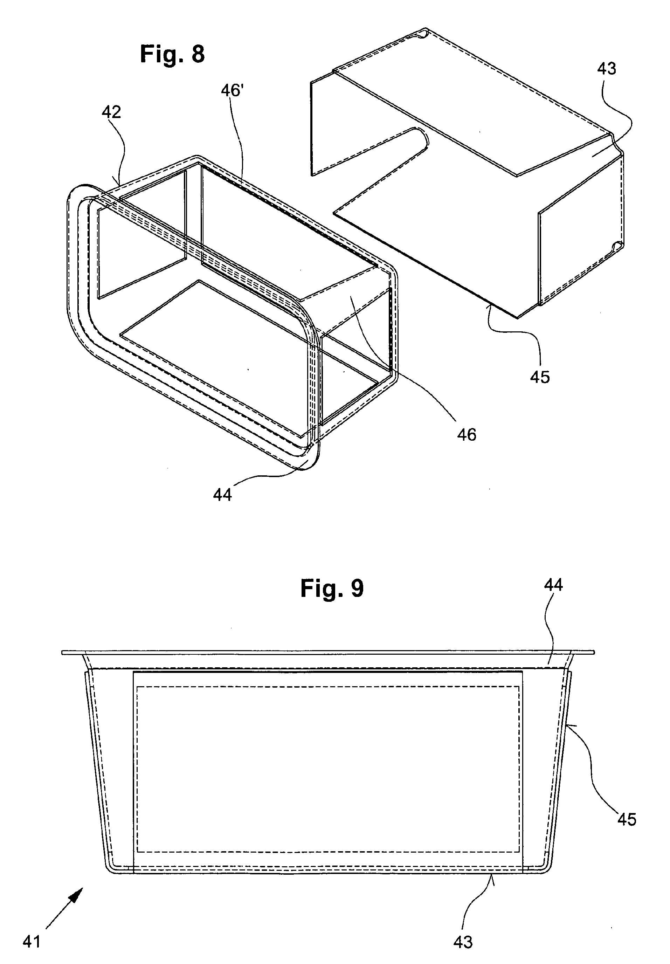

Der in Figur 9 gezeigte Behälter 41 besteht ebenfalls aus einem Rahmen 42 aus Kunststoff und einem Mantel 45 aus Karton, in den gemäß Figur 8 ein Boden 43 eingeformt ist. Zur Erhöhung der Stabilität ist der Rahmen 42 mit Stegen 46 und 46' ausgestattet, an denen sich der Mantel 45 anlegt und mit denen dieser durch Anschmelzen oder auch durch Klebstoff verbunden wird. Außerdem ist im oberen Bereich des Rahmens 42 wiederum ein Formteil 44 als Siegelrand vorgesehen, auf das ein Verschlussdeckel nach Befüllung des Behälters 41 aufgesiegelt werden kann.

## Patentansprüche

1. Behälter (1), der aus einem als Mantel (5) ausgebildeten Grundkörper (2), an dem in den beiden Endbereichen ein Boden (3) bzw. ein Formteil (4), z.B. in Form eines Siegelrandes oder eines Mundstücks angebracht sind, besteht
**dadurch gekennzeichnet,**
**dass** der Grundkörper (2) ganz oder teilweise aus Karton (11) oder Pappe als Ausgangswerkstoff hergestellt ist, der vorzugsweise einseitig mit Kunststoff beschichtet ist, dass der Boden (3, 3') unmittelbar an dem Grundkörper (2) angeformt oder auf dessen beschichteter Seite fest mit diesem verbunden ist und dass das aus Kunststoff bestehende Formteil (4) mittels der Beschichtung (12) des Kartons (11) mit dem Grundkörper (2) fest verbunden ist.

2. Behälter nach Anspruch 1,
**dadurch gekennzeichnet,**
**dass** die Kunststoffbeschichtung (12) des Grundkörpers(2) auf dessen Innenseite aufgebracht, vorzugsweise aufgesprüht, ist.

3. Behälter nach Anspruch 1 oder 2,
**dadurch gekennzeichnet,**
**dass** der den Grundkörper (2) des Behälters (1) bildende Mantel (5) aus einem flächigen Kartonabschnitt (11') hergestellt ist, dessen Stoßkanten nach dem Verformen vorzugsweise auf der Innenseite des Behälters (1) mit einer Siegelnaht (14) abgedeckt sind.

4. Behälter nach einem oder mehreren
der Ansprüche 1 bis 3,
**dadurch gekennzeichnet,**
**dass** bei einem Behälter (21) mit einem aus Kunststoff bestehenden Boden (23) dieser über einen oder mehrere an dem Boden (23) angeformter Stege (26) mit einem Formteil (24) verbunden ist und dass der aus Karton oder Pappe bestehende Mantel (25) des Behälters (21) mit dem Boden (23), den Stegen (26) und/oder dem Formteil (24) als Rahmen (22) durch Anschmelzen vorzugsweise auf deren Außenseiten fest verbunden ist.

5. Behälter nach einem oder mehreren
der Ansprüche 1 bis 4,
**dadurch gekennzeichnet,**
**dass** der den Mantel (5; 25) des Behälters (1; 21) bildende Karton (11) auf seiner Außenmantelfläche in Form eines Werbeträgers ausgebildet und bedruckt ist.

6. Verfahren zur Herstellung eines nach einem der Ansprüche 1 bis 5 ausgebildeten Behälters,
**dadurch gekennzeichnet,**
**dass** bei einem teilweise durch Spritzgießen herzustellenden Behälter (21) vor dem Ausformen des Bodens (23) der Stege (26) und/oder des Formteils (24) der aus Karton oder Pappe bestehende mit Kunststoff beschichtete Mantel (25) in das Formwerkzeug (31) eingelegt wird und dass durch Anschmelzen der Kunststoffbeschichtung des Mantels (25) und/oder des Bodens (23) und/oder der Stege (26) und/oder des Formteils (24) bei deren Ausformung diese mit dem Mantel (25) verbunden werden.
